# EUROPEAN PATENT APPLICATION

(11) **EP 3 470 250 A1**
(43) Date of publication of application: **17.04.2019**
(21) Application number: 18000789.0
(22) Date of filing: 04.10.2018
(51) Int. Cl.: B60J 5/04, B60J 5/06

(54) **TRANSPORT VEHICLE EQUIPPED WITH AT LEAST ONE SIDE DOOR WITH HORIZONTAL FOLDING**

(30) Priority: 10.10.2017 IT 201700113693
(71) Applicant: Rolfo S.p.A., 12042 Bra (CN) (IT)
(72) Inventor: Rolfo, Giorgio, I-12042 BRA (CN) (IT); Arnulfo, Elio, I-12042 BRA (CN) (IT)
(74) Representative: Garavelli, Paolo

(57) **Abstract**

A transport vehicle (1) is described, composed of at least one loading flatbed (3) of one or more motor vehicles enclosed on its perimeter by a containing structure composed of one or more side walls (5), of at least one front wall and one rear wall and at least one upper covering ceiling (9) of such flatbed (3), at least one of such side walls (5) comprising at least one access opening equipped with at least one door (11) with vertical movement for opening with horizontal packing and for closing, and vice versa.

## Description

The present invention refers to a transport vehicle equipped with at least one side door with horizontal packing, in particular for transporting motor vehicles on loading flatbeds such as a car transporter of the closed type.

Different types of vehicles are known in the art for transporting motor vehicles such as, for example, the car transporters: in some cases, such as for example those providing for the transport of particularly valuable and/or rare motor vehicles, such car transporters, generically called "closed", comprise one of more loading flatbeds completely enclosed by perimeter containing walls and ceilings in order to protect the motor vehicles, loaded from the outside, both against weather events, dirt, dusts and as regards possible thefts and/or tampering and/or vandal acts.

Such closed car transporters are however currently equipped, both on their rear and very often on their side (also in order to allow the drivers to more easily go down or go up from or on the loading flatbed of the transport vehicle once it is loaded or to load a motor vehicle) of access doors with single or double swing-door with vertical or horizontal hinging.

The doors of such transport vehicles however suffer from some inconveniences, among which the following:
- they are not capable of being easily automated;
- they need a suitable blockage which takes care of keeping them in an open position;
- when there are two adjacent doors along the same wall of the transport vehicle, it can happen that two swing-doors mutually interfere, preventing the complete opening or compel to keep an enough distance between such two doors;
- they greatly suffer when there is wind when they are partially open (for example at 90°);
- locks and closures of such doors are cumbersome and costly.

Therefore, object of the present invention is solving the above prior art problems, by providing a transport vehicle, in particular for transporting motor vehicles on loading flatbeds, such as a closed car transporter, equipped with at least one side door with horizontal packing, which allows removing the inconveniences deriving from the use of prior art swing-doors.

The above and other objects and advantages of the invention, as will appear from the following description, are obtained with a transport vehicle equipped with at least one side door with horizontal packing as claimed in claim 1. Preferred embodiments and non-trivial variations of the present invention are the subject matter of the dependent claims.

It is intended that all enclosed claims are an integral part of the present description.

It will be immediately obvious that numerous variations and modifications (for example related to shape, sizes, arrangements and parts with equivalent functionality) can be made to what is described, without departing from the scope of the invention as appears from the enclosed claims.

The present invention will be better described by some preferred embodiments thereof, provided as a non-limiting example, with reference to the enclosed drawings, in which:

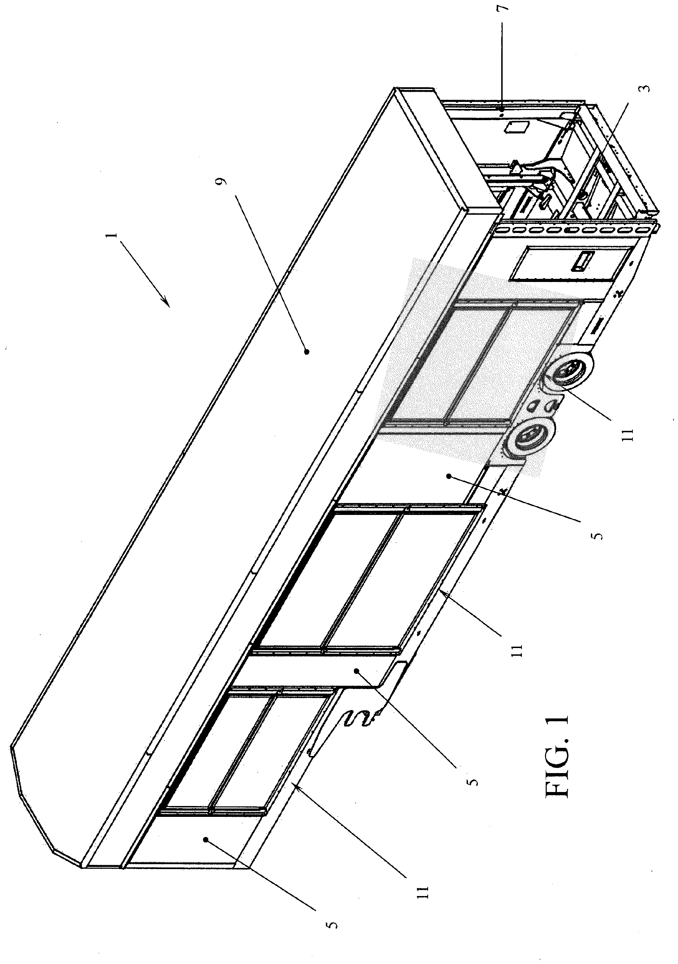

- Figure 1 shows a top perspective view of a preferred embodiment of the transport vehicle of the present invention with all its side doors with horizontal packing in a closed position;

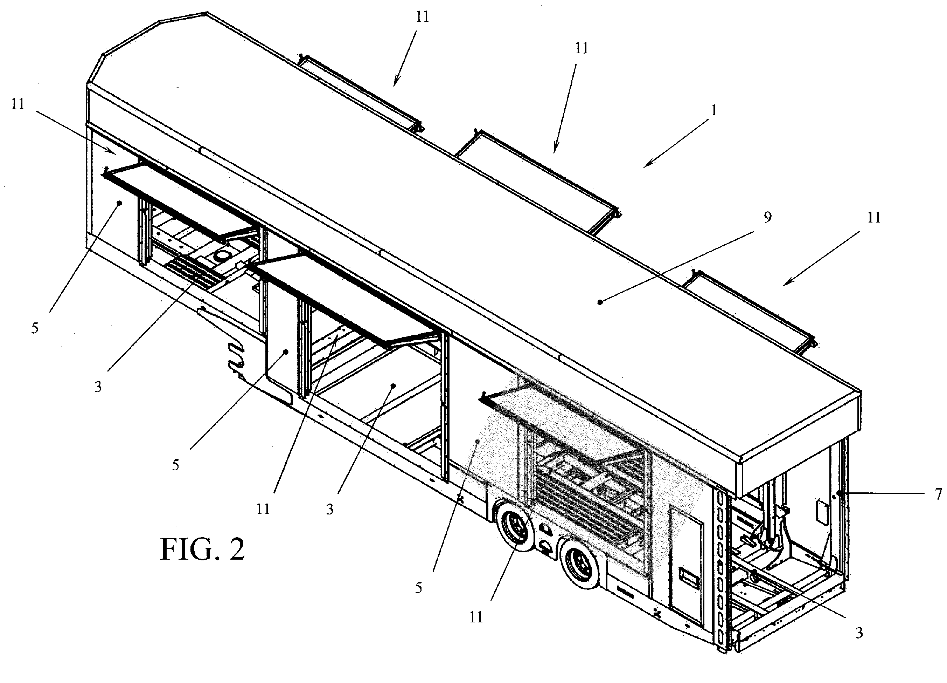

- Figure 2 shows a top perspective view of the vehicle of Figure 1 with all its side doors with horizontal packing in an open position;

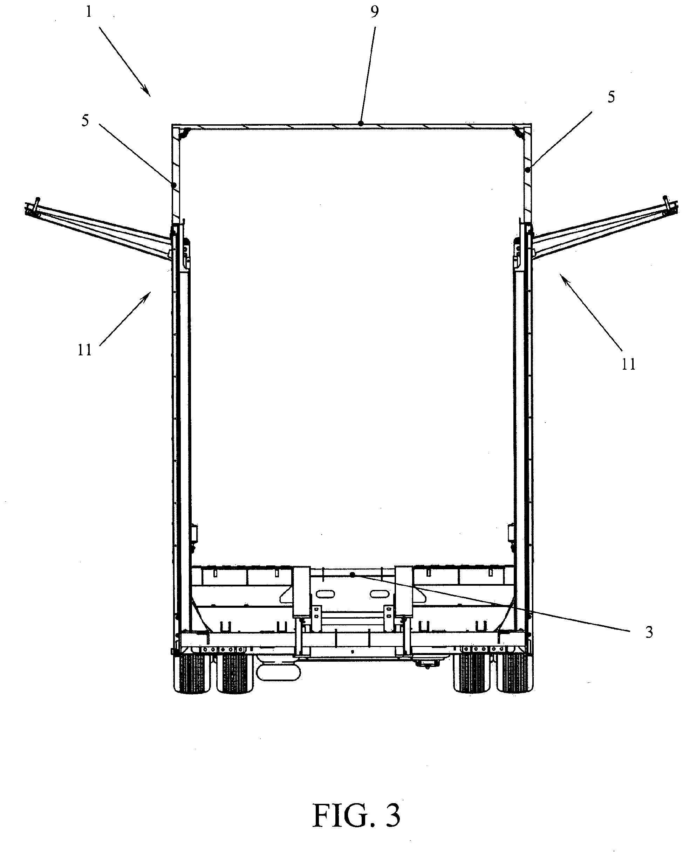

- Figure 3 shows a rear view of the vehicle of Figure 2 with all its side doors with horizontal packing in an open position;
- Figures 4a and 4b show top perspective views of a side door with horizontal packing of the vehicle of the present invention respectively in a closed position and in an open position seen from outside the vehicle itself;
- Figures 5a and 5b show top perspective views of the side door with horizontal packing of Figures 4a and 4b respectively in a closed position and in an open position seen from inside the vehicle of the present invention;
- Figure 6 is an enlarged perspective view of the handling device of the door contained in box A of Figure 5a; and
- Figure 7 is an enlarged perspective view of the locking device of the door contained in box B of Figure 5a.

With reference thereby to the Figures, it is possible to note that the transport vehicle 1 according to the present invention is composed of at least one loading flatbed 3 of one or more motor vehicles (not shown) enclosed on its perimeter by a containing structure composed of one or more side walls 5 (namely, parallel to the running direction of the vehicle 1 itself), of at least one front wall and one rear wall (this latter one for example equipped with at least one moving door 7 for accessing and loading/unloading on the flatbed 3 of the type substantially known in the art) and at least one upper covering ceiling 9 of the flatbed 3 .

Advantageously, at least one of such side walls 5 comprises at least one access opening equipped with at least one door 11 with vertical opening and closing movement with horizontal packing.

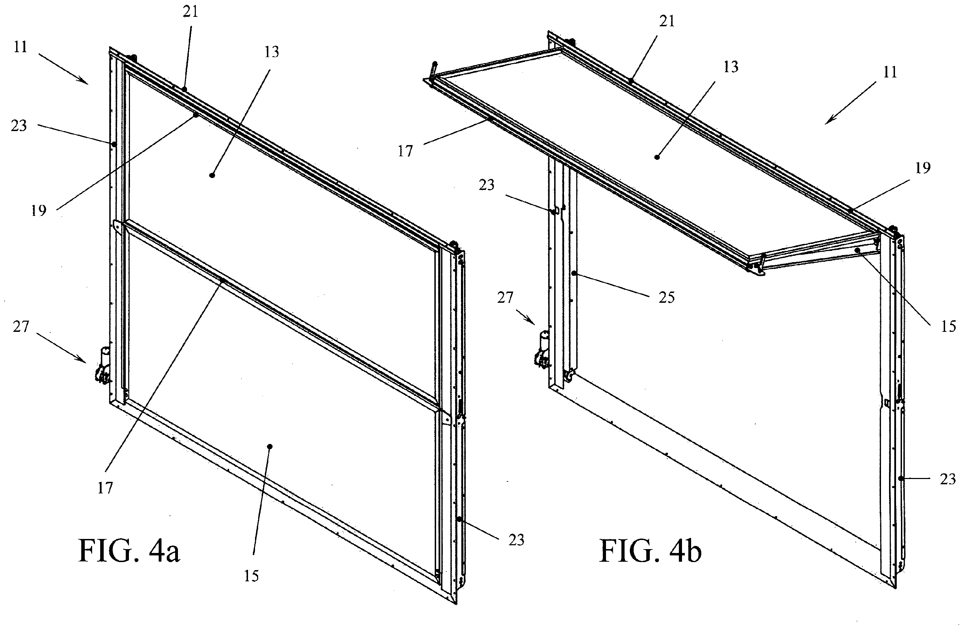

In a preferred embodiment thereof, as it is possible to note, in particular, in Figures 4a to 5b, such door 11 comprises at least one top panel 13 and at least one below panel 15, such top panel 13 and below panel 15 being mutually connected through at least one first hinging junction 17 interposed between the horizontal adjacent sides of such panels 13, 15, and such top panel 13 being connected to at least one portion of an upper cross-member 19 of the respective opening by interposing at least one second hinging junction 21.

Obviously, at least the number of below panels 15 can be variable and different from one: in this case, clearly, each below panel 15 can be connected to the immediately adjacent below panels 15 through a respective first hinging junction 17 as described above.

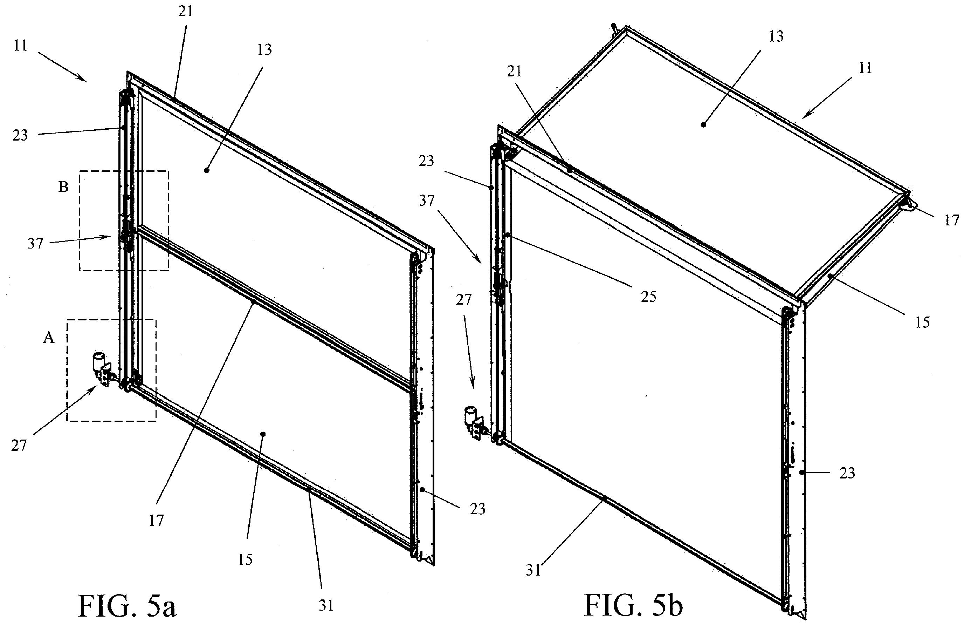

Moreover, such door 11 can comprise at least one vertical side riser 23 arranged at least partially along one of the vertical sides of the opening, such vertical side riser 23 being equipped with at least one sliding guide 25, at least one of such below panels 15 being equipped along at least one lower side end thereof with at least one sliding means, such as for example a sliding cursor (not shown), adapted to laterally and sliding engage such guide 25 to guide the vertical movement for opening with horizontal packing (reaching the open position like the one shown, for example, in Figures 4b and 5b) and for closing (reaching the closed position like the one shown, for example, in Figures 4a and 5a) of such door 11, and vice versa.

Preferably, the door 11 comprises at least one pair of such vertical side risers 23 arranged at least partially along the vertical sides of the opening, each one of such vertical side risers 23 being equipped with at least one sliding guide 25, at least one below panel 15 being equipped along its own lower opposite side ends with the sliding means adapted to laterally and sliding engage the guide 25 to guide the vertical movement for opening with horizontal packing and for closing of such door 11, and vice versa, as previously described.

In the door 11 like the one described above and shown as an example in the Figures, it can therefore be noted how, in order to make the vertical movement for opening with horizontal packing and for closing, and vice versa to pass from the closed position of Figures 4a and 5a, to the open position of Figures 4b and 5b, and vice versa, the top panel 13 can rotate, through the second hinging junction 21, around a horizontal axis placed below the upper cross-member 19 of the opening, while the below panel 15, being connected to the top panel 13 through the first hinging junction 17, can rotate around a horizontal axis below the top panel 13 itself.

As it is possible to note in the Figures, once having taken the door 11 in its open position, advantageously it leaves the respective opening completely free and lacking any encumbrance.

Obviously, it is possible to provide that each of the panels 13, 15 has a width substantially equal to the width of the respective opening and, if there are only two of such panels 13, 15, that each one of them has a height substantially equal to half the height of the opening itself.

In particular, the hinging junction 17, 21 can be composed of at least one continuous profile made of deformable rubber.

Obviously, handling of the panels 13, 15 of the door 11 can be indifferently made manually or in an automated/motored way.

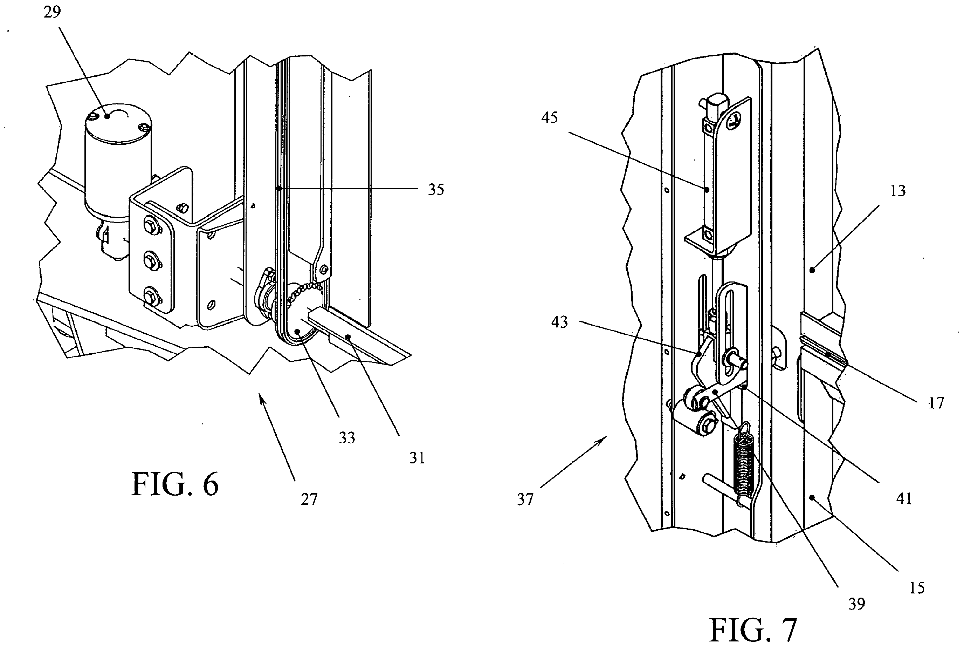

In this latter case, as it is possible to note in particular in Figures 5a and 6, the door 11 can comprise at least one handling device 27 adapted to vertically move the panels 13, 15 by acting on at least one sliding means, such as for example one of the sliding cursors, of at least one below panel 15 laterally and sliding engaging at least one guide 25.

Preferably, the handling device 27 comprises at least one rotary actuator 29, first idle transmission means arranged on the top upon opening and second motor transmission means 33 arranged on the bottom upon opening, such first and second transmission means being preferably arranged along at least one guide 25 and such second motor transmission means 33 being rotated by such rotary actuator 29.

The handling device 27 further comprises at least one flexible transmission means 35, composed for example of belts or chains, housed along a guide, such flexible transmission means 35 being connected to at least one sliding means and wound around at least one pair of first and second transmission means: obviously, if the flexible transmission means 35 are composed of belts, the first and second transmission means will preferably be composed of pulleys, while if the flexible transmission means 35 are composed of chains, the first and second transmission means will preferably be composed of pinions.

Still more preferably, the handling device 27 comprises at least one rotation shaft 31 horizontally placed along the threshold of the respective opening and first idle transmission means arranged on the top upon opening and second motor transmission means 33 arranged on the bottom upon opening, such first and second transmission means being preferably arranged along the respective guide 25 and such second motor transmission means 33 being integral with such rotation shaft 31 to be rotated synchronously by such rotary actuator 29 through the rotation shaft 31.

The handling device 27 further comprises at least two flexible transmission means 35, also in this case composed for example of belts or chains, housed along the guide 25, each of which being connected to respective sliding means and wound around a respective pair of first and second transmission means: also in this case, obviously, if the flexible transmission means 35 are composed of belts, the first and second transmission means are preferably composed of pulleys, while if the flexible transmission means 35 are composed of chains, the first and second transmission means are preferably composed of pinions.

Through the handling device 27 as described above, handling of the panels 13, 15 therefore occurs through one or more flexible transmission means 35 (such transmission means being preferably side belts or chains, each one of which placed in at least one respective guide 25) connected to respective sliding means and wound on at least one pair of first idle upper transmission means and second driving lower transmission means (such transmission means being preferably pulleys or pinions). The driving transmission means are then directly actuated by the rotary actuator 29 or synchronously through the rotation shaft 31 rotated by the rotary actuator 29 itself.

It can be noted how, if such rotary actuator 29 is composed of a worm screw-type motor reducer, it is irreversible, being therefore able to operate, advantageously, also as brake and blockage of the panels 13, 15 of the door 11 in any position, even an intermediate one between the open position and the closed position.

For blocking the panels 13, 15 in the closing position of the respective opening, in order therefore to impair their forced movement when opening, the door 11 can further comprise a locking device 37 like the one shown, for example, in particular in Figures 5a and 7.

In particular, such locking device 37 comprises at least one peg 39 fastened to one of said panels 13, 15 (preferably at about the height of the first hinging junction 17 arranged between the panels 13, 15), such peg 39 being adapted to be inserted through a respective opening 41 obtained along a respective riser 23. Such locking device 37 further comprises at least one wedge-type block 43 actuated by at least one actuating means 45 such as, for example, a linear pneumatic actuator, to insert (thereby preventing the movement of the panels 13, 15 when opening) or remove (thereby allowing the movement of the panels 13, 15 when opening) the wedge-type block 43 respectively through or from the peg 39.

The locking device 37 can further have an automated operation comprising at least one sensor adapted to detect the inserted position of the peg 39 into the opening 41 of the riser 23 to consequently actuate, automatically, the actuating means 45 of the wedge-type block 43.

In the Figures, the transport vehicle of the present invention has been shown as an example as a semi-trailer, but it is wholly evident that it can be configured in any other structure, such as, for example, a trailer or a truck superstructure/body for road transport or a wagon for railway transport, without thereby departing from the scope of the present invention, as claimed in the enclosed claims.

## Claims

1. Transport vehicle (1) composed of at least one loading flatbed (3) of one or more motor vehicles closed on its perimeter by a containing structure composed of one or more side walls (5), of at least one front wall and one rear wall and at least one upper covering ceiling (9) of said flatbed (3), at least one of said side walls (5) comprising at least one access opening equipped with at least one door (11) with vertical movement for opening with horizontal packing and for closing, and vice versa, said door (11) comprising at least one top panel (13) and at least one below panel (15), said top panel (13) and below panel (15) being mutually connected through at least one first hinging junction (17) interposed between the horizontal adjacent sides of said panels (13, 15) and said top panel (13) being connected to at least one portion of an upper cross-member (19) of said opening by interposing at least one second hinging junction (21), said door (11) comprising at least one vertical side riser (23) arranged at least partially along one of the vertical sides of said opening, said vertical side riser (23) being equipped with at least one sliding guide (25), at least one of said below panels (15) being equipped along at least one of the own lower side ends with at least one sliding means adapted to laterally and sliding engage said guide (25) to guide said vertical movement for opening with horizontal packing and for closing, and vice versa, said door (11) comprising at least one handling device (27) adapted to vertically move said panels (13, 15) acting on at least one of said sliding means of at least one of said below panels (15) laterally and sliding engaging at least one of said guides (25), **characterized in that** said handling device (27) comprises at least one rotary actuator (29), first idle transmission means arranged on the top upon said opening and second motor transmission means (33) arranged on the bottom upon said opening, said second motor transmission means (33) being rotated by said rotary actuator (29), at least one flexible transmission means (35) connected to at least one of said sliding means and wound around at least one pair of said first and second transmission means.

2. Transport vehicle (1) according to the previous claim, **characterized in that** said hinging junction (17, 21) is composed of at least one continuous profile made of deformable rubber.

3. Transport vehicle (1) composed of at least one loading flatbed (3) of one or more motor vehicles enclosed on its perimeter by a containing structure composed of one or more side walls (5), of at least one front wall and one rear wall and at least one upper covering ceiling (9) of said flatbed (3), at least one of said side walls (5) comprising at least one access opening equipped with at least one door (11) with vertical movement for opening with horizontal packing and for closing, and vice versa, said door (11) comprising at least one top panel (13) and at least one below panel (15), said top panel (13) and below panel (15) being mutually connected through at least one first hinging junction (17) interposed between the horizontal sides adjacent of said panels (13, 15) and said top panel (13) being connected to at least one portion of an upper cross-member (19) of said opening by interposing at least one second hinging junction (21), said door (11) comprising at least one locking device (37) of said panels (13, 15) in a closing position of said opening, **characterized in that** said locking device (37) comprises at least one peg (39) fastened to one of said panels (13, 15), said peg (39) being adapted to be inserted through a respective opening (41) obtained along a respective riser (23), at least one wedge-type block (43) actuated by at least one actuating means (45) to insert or remove said wedge-type block (43) respectively through or from said peg (39).

4. Transport vehicle (1) according to claim 1 or 2, **characterized in that** said handling device (27) comprises at least one rotation shaft (31) horizontally placed along a threshold of said opening, said second motor transmission means (33) being integral with said rotation shaft (31) to be synchronously rotated by said rotary actuator (29) through said rotation shaft (31), at least two flexible transmission means (35) each of which being connected to respective sliding means and wound around a respective pair of said first and second transmission means.

5. Transport vehicle (1) according to the previous claim, **characterized in that** said rotary actuator (29) is composed of a worm screw-type motor reducer.

6. Transport vehicle (1) according to claim 3, **characterized in that** said locking device (37) comprises at least one sensor adapted to detect an inserted position of said peg (39) in said opening (41) of said riser (23), to automatically actuate said actuating means (45) of said wedge-type block (43) .
